# EUROPÄISCHE PATENTSCHRIFT

(11) **EP 1 343 674 B1**
(45) Veröffentlichungstag und Bekanntmachung des Hinweises auf die Patenterteilung: **13.08.2008**
(21) Anmeldenummer: 01995678.8
(22) Anmeldetag: 29.11.2001
(51) Int. Cl.: B60T 13/68, B60T 7/04

(54) **FUSS BREMSMODUL MIT WAKE-UP-FUNKTION**
FOOT BRAKE MODULE COMPRISING WAKE-UP FUNCTION
MODULE DE FREIN A PIED A FONCTION D'ACTIVATION

(30) Priorität: 08.12.2000 DE 10061054
(43) Veröffentlichungstag der Anmeldung: 17.09.2003
(73) Patentinhaber: KNORR-BREMSE SYSTEME FÜR NUTZFAHRZEUGE GMBH, 80809 München (DE)
(72) Erfinder: SCHLICHENMAIER, Andreas, S-187 64 Täby (SE); BEYSE, Thorsten, 67133 Maxdorf (DE); GSCHEIDLE, Wolfgang, 71720 Oberstenfeld (DE); HÄFELE, Klaus, 71397 Leutenbach (DE)
(86) Internationale Anmeldenummer: PCT/EP2001/013933
(87) Internationale Veröffentlichungsnummer: WO 2002/046014

(56) Entgegenhaltungen:
- DE-A- 19 826 131
- US-A- 5 961 190
- US-A- 6 092 880

## Beschreibung

Die Erfindung betrifft ein Steuersystem für ein elektronisches Bremssystem umfassend eine Fußbremseinheit sowie eine Zentraleinheit mit Spannungsversorgung gemäß dem Oberbegriff des Anspruches 1 sowie ein Verfahren zum Aktivieren einer Zentraleinheit eines Steuersystems bei ausgeschalteter Zündung. Steuersysteme für elektronische Bremssysteme umfassen nach derzeitigem Stand der Technik eine Fußbremseinheit mit Mitteln zum Gewinnen eines elektrischen Signales aus der Bewegung eines Fußbremspedales sowie eine Zentraleinheit für das elektronische Bremssystem zum Ansteuern des Bremssystems. An die Zentraleinheit sind Rad-/Achssteller angeschlossen, die den Bremsdruck an jedem Rad regeln. Die Fußbremsmodule bzw. Fußbremseinheit derartiger elektropneumatischer Bremssysteme besitzen mehrere elektrische Anschlußleitungen zur elektrischen Versorgung des Fußbremsmodules sowie Signalausgänge zur Zentraleinheit, mit der die Stellung des Bremspedales an die Zentraleinheit übermittelt wird. Aus der Stellung des Bremspedales wiederum leitet die Zentraleinheit die Bremsanforderung ab und steuert den Bremsdruck in den Radstellern entsprechend ein. Ein Nachteil der Systeme gemäß dem Stand der Technik war, daß die elektronische Bremse nur dann aktiviert wurde, wenn die Fahrzeugzündung angeschaltet wurde, d.h. die elektronischen Signale an die Zentraleinheit, die über die Stellung des Fußbremspedals Auskunft gaben, wurden nur bei eingeschalteter Zündung übermittelt.

Aus der gattungsgemäßen US 5, 961, 190 ist ein Bremssystem mit einem Steuersystem, umfassend eine Fußbremseinheit mit Mitteln zum Gewinnen eines elektrischen Signales beim Bewegen der Fußbremseinheit und einer Zentraleinheit zum Ansteuern des elektronischen Bremssystemes bekannt geworden.

Aus der US 6,092,880 ist ein Bremssystem für eine hydraulische Bremse mit einem Wake-up-Schaltkreis bekannt geworden.

Aufgabe der Erfindung ist es, die Nachteile der Systeme gemäß dem Stand der Technik zu überwinden und insbesondere ein System zur Verfügung zu stellen, das bei Betätigung des Fußbremsmoduls die Zentraleinheit der elektronischpneumatischen Bremse automatisch aktiviert und damit elektrische Bremsungen ohne vorheriges Einschalten der Zündung ermöglicht. Bevorzugt soll das System derart aufgebaut sein, daß das Fußbremsmodul bzw. die Fußbremseinheit von der Zentraleinheit überwacht werden kann und im Fehlerfall die Zentraleinheit durch Prüfungen ermitteln kann, ob und wenn ja, welche Fehler das Fußbremsmodul oder die Verkabelung zwischen Zentraleinheit und Fußbremsmodul aufweisen, um gegebenenfalls das elektronische Bremssystem in den pneumatischen Backup-Modus zu schalten.

Erfindungsgemäß wird die Aufgabe durch die Merkmale von Anspruch 1 gelöst. Insbesondere umfasst das Steuersystem eine Schaltung, mit der durch Betätigen des Fußbremspedals der Fußbremseinheit bei ausgeschalteter Fahrzeugzündung die Zentraleinheit mit Spannungsversorgung und damit das gesamte elektrischpneumatische Bremssystem aktiviert wird und einen Geber und einem mit diesem Geber verbundenen Schalter.

Eine derartige Schaltung ermöglicht es, dass die elektrische Bremse auch bei ausgeschalteter Zündung betätigt werden kann, z.B. wenn das Fahrzeug bei ausgeschalteter Zündung am Berg rollt und abgebremst werden soll. Das Geberelement wandelt die Stellung des Fußbremspedals z. B. in ein Spannungssignal um und übermittelt beispielsweise über ein analoges oder ein pulsweitenmoduliertes Signal die Bremspedalstellung an die Zentraleinheit, die dieses Signal wiederum auswertet. Der Geber ist in einer vorteilhaften Ausführungsform der Erfindung mit dem Schalter mechanisch gekoppelt. Beim Betätigen des Fußbremspedals wird dieser Schalter beispielsweise geschlossen und durch das Schließen des Schalters ein Signal bei ausgeschalteter Zündung generiert, mit dem die Spannungsversorgung und damit die Zentraleinheit aktiviert wird. Zur Erhöhung der Systemsicherheit und -verfügbarkeit können der/die Geber und zugehörige Schalter jeweils redundant ausgeführt werden, d.h. es sind zwei Geber und zwei Schalter ausgeführt. Dies ist vorteilhaft, aber keineswegs notwendig. Die Erfindung würde auch mit nur einem Geber und einem Schalter funktionieren. Besonders vorteilhaft ist es, wenn die Schaltung zur Aktivierung der Zentraleinheit eine Steuerleitung, die mit der Spannungsversorgung verbunden ist und des weiteren mindestens einen Schalter im Steuergerät umfaßt, der durch Ändern des Schalterzustandes (z.B. Schließen) des Schalters im Fußbremsmodul und damit durch Anlegen z.B. der Masse über den Schalter im Fußbremspedal geschlossen oder gesperrt wird, so daß auf der Steuerleitung ein Signal generiert und das Steuergerät aktiviert wird. In einer besonders vorteilhaften Ausführungsform ist der Schalter im Steuergerät ein Transistor, beispielsweise ein npn-Transistor, der als Schalter beschaltet ist. Soll die Zentraleinheit aktiviert werden, so wird bei einem als Öffner ausgelegten Schalter, der Schalter geöffnet. An der Basis des Transistors liegt dann nicht mehr Masse wie im geschlossen Zustand an, sondern eine Spannung. Aufgrund dieser Spannung fließt ein Basis-Emitter-Strom und der Transistor wird durchgeschaltet. Hierdurch wird auf der an den Kollektor des Transistors angeschlossenen Steuerleitung ein Signal generiert, daß die ebenfalls an die Steuerleitung angeschlossene Spannungsversorgung und damit die Zentraleinheit aktiviert. Die Verwendung von Transistoren in der Zentraleinheit bzw. dem Steuergerät hat den Vorteil, daß das Signal zur Aktivierung quasi stromlos generiert werden kann und auch bei abgeschalteter Zündung ein nur geringer Ruhestrom fließt.

In einer besonders einfachen Ausführungsform der Erfindung sind die bzw. der Schalter des Fußbremsmoduls direkt an die Spannungsversorgung angeschlossen. Bei einer derartigen Ausführungsform sind die Schalter als Schließer ausgeführt. Wird das Fußbremsmodul bei ausgeschalteter Zündung betätigt, so wird der Schalter geschlossen und an die Spannungsversorgung Masse angelegt. Hierdurch wird die Spannungsversorgung und damit die Zentraleinheit aktiviert. Neben dem Steuersystem stellt die Erfindung auch ein Verfahren zum Aktivieren der Zentraleinheit eines Steuersystems bei ausgeschalteter Zündung zur Verfügung.

Die Erfindung soll nachfolgend anhand der Figuren beispielhaft beschrieben werden.

Es zeigen:
- Figur 1:: eine erste Ausführungsform einer erfindungsgemäßen Schaltung mit als Schalter beschalteten Transistoren in der Zentraleinheit
- Figur 2:: eine zweite Ausführungsform der Erfindung ohne weitere Schalter in der Zentraleinheit

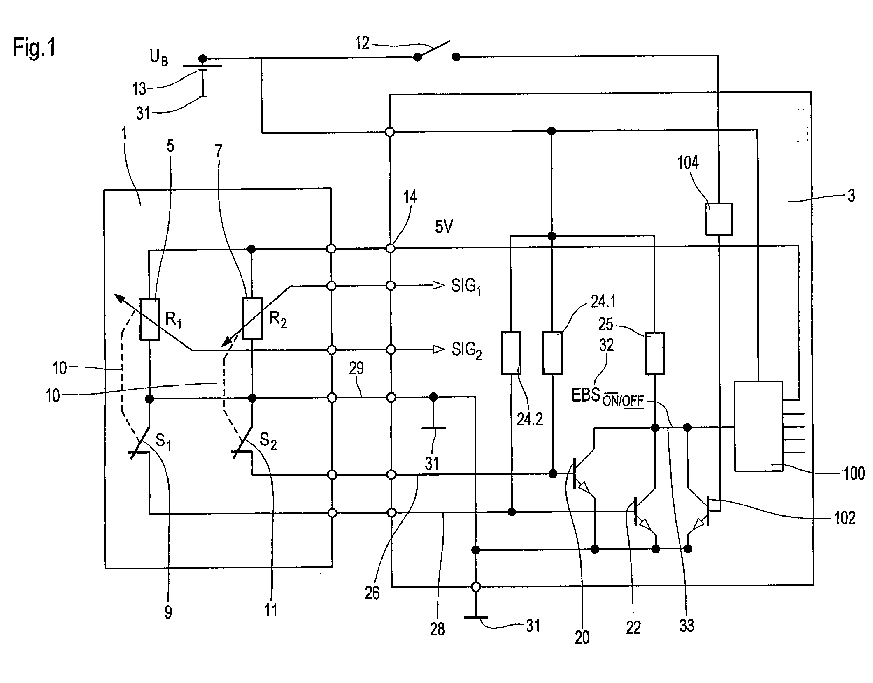

In Figur 1 ist eine Ausführungsform einer erfindungsgemäßen Schaltung zur Aktivierung der Zentraleinheit bei ausgeschalteter Zündung dargestellt. Diese Schaltung stellt lediglich ein Beispiel für den allgemeinen Gedanken der Erfindung dar und ist keineswegs hierauf beschränkt.

Das Steuersystem umfaßt ein Fußbremsmodul 1 sowie eine Zentraleinheit 3. Zur Aufnahme der Stellung des Fußbremspedals umfaßt das Fußbremsmodul 1 einen oder zwei Geber 5,7. Den Gebern 5,7 sind zwei z.B. mechanisch gekoppelte Schalter 9,11 zugeordnet. Die Kopplung der Schalter ist durch die strichpunktierte Linie 10 angedeutet. Bei eingeschalteter Zündung, d.h. geschlossenem Zündschalter 12 ist die Spannungsversorgung und damit die Zentraleinheit 3 bereits aktiviert und an Punkt 14 liegt beispielsweise eine Spannung von 5 V an. Die von den Gebern erzeugten Signale SIG 1 und SIG 2, die ein Maß für die Stellung des Fußbremspedals sind, werden bei aktivierter Zentarleinheit 3 ständig von der Zentraleinheit 3 ausgewertet und die elektro-pneumatischen Stellglieder der Bremse entsprechend angesteuert. Die Stellglieder der Bremse sind vorliegend nicht dargestellt. Als Geber können in einer Ausführungsform der Erfindung Potentiometer verwendet werden. Alternativ können auch jegliche Art von elektronischen Gebersystemen (z.B. berührungslose Sensoren) zur Anwendung kommen.
Die Zentraleinheit 3 ist sowohl bei geschlossenem Zündschalter 12 wie bei geöffnetem Zündschalter 12 an die Spannung U_{B}, die Dauerstromversorgung beispielsweise in Form einer Batterie 13 angeschlossen. Durch den Anschluß an die Batteriespannung fließt ein geringer Dauerstrom durch die Zentraleinheit 3 , der abhängig von allen an die Dauerstromversorgung 13 angeschlossenen Schaltungsteilen ist und der geringstmöglich sein soll, um die Batterie im Ruhezustand nicht unnötig zu belasten.

Bei geöffnetem Zündschalter 12 befindet sich die Zentraleinheit 3 im Ruhezustand, da die Spannungsversorgung nicht aktiviert ist. Am Punkt 14 liegt dann keine Spannung an und es werden keine Signale SIG1 und SIG2 generiert.
Im zentralen Steuergerät 3 sind in der in Figur 1 gezeigten Ausführungsform Transistoren 20, 22 angeordnet, die als Schalter beschaltet sind. Die Basis der Transistoren 20, 22 ist an die Schalter 9, 11 angeschlossen und über je einen Vorschaltwiderstand 24.1, 24.2 an die Batteriespannung U_{B}. Der Kollektor der beiden Transistoren ist über einen Widerstand 25 an U_{B} angeschlossen und an die Signal- bzw. Steuerleitung 33, die wiederum an die Spannungsversorgung 100 angeschlossen ist. Auf der Steuerleitung 33 liegt das Signal 32 EBS_{ON / OFF} an, das dazu dient, die Spannungsversorgung 100 und damit die Zentraleinheit 3 zu aktivieren. Befindet sich das Zentralsteuergerät 3 bei ausgeschalteter Zündung im Ruhezustand, so liegt auf der Steuerleitung 33 eine Spannung - nämlich das Signal EBS_{OFF}=log.1-an. Die als Öffner ausgebildeten Schalter 9, 11 sind in diesem Betriebszustand geschlossen, so daß die Basis der beiden Transistoren 20, 22 auf Masse 31 liegt, d.h. die Transistoren 20, 22 sind gesperrt.

Wird nun das Fußbremspedal bei ausgeschalteter Zündung, d.h. bei geöffnetem Zündschalter 12 betätigt, so öffnen die als Öffner ausgeführten Schalter 9, 11. An der Basis der Transistoren 20, 22, liegt nun eine Spannung an und es fließt ein Basis-Emitter-Strom von U_{B} zur Masse. Hierdurch werden die Transistoren durchgeschaltet und der Kollektor der Transistoren auf dasselbe Potential wie der Emitter - vorliegend Masse - gezogen. Dann liegt auf der mit den Kollektoren der Transistoren 20, 22 verbundenen Steuer- bzw. Signalleitung 33, die mit der Spannungsversorgung 100 verbunden ist, das Signal EBS_{ON} von beispielsweise 0V (log.0) an. Bei durchgeschalteten Transistoren (20/22) wird die Spannungsversorgung und damit die Zentraleinheit aktiviert. Nunmehr liegt bespielsweise am Punkt 14 eine Spannung von 5V an und SIG1 und SIG2, die Auskunft über die Stellung des Bremspedales geben, werden an die Zentraleinheit 3 übermittelt.

Auf die oben beschriebene Art und Weise ist es gemäß der Erfindung möglich, die Zentraleinheit 3 und damit das gesamte elektronische Bremssystem eines Fahrzeuges bei ausgeschalteter Zündung durch alleiniges Betätigen des Bremspedals zu aktivieren.

Wird die Zündung eingeschaltet, indem der Zündschalter 12 geschlossen wird, so wird bei nichtbetätigtem Bremspedal ebenfalls die Spannungsversorgung und damit die Zentraleinheit 3 aktiviert. In diesem Fall wird an die Basis des Transistors 102, die bei geöffneter Zündung auf Masse liegt, über Widerstand 104 eine Spannung angelegt. Es fließt ein Basis-Emitter-Strom und der Kollektor des Transistors 102 wird auf auf Masse gezogen, so daß auf Steuerleitung 33 wiederum das EBS_{ON}-Signal anliegt, so daß die Spannungsversorgung und damit die Zentraleinheit 3 für das elektronische Bremssystem aktiviert wird.

Besonders vorteilhaft ist, daß die Schaltung mit den Transistoren 20, 22 "eigensicher" ausgeführt werden kann. Besteht z.B. eine Unterbrechung zwischen der Masseleitung 29 vom Zentralsteuergerät 3 zum Fußbremsmodul oder eine Unterbrechung der Leitungen 26 und/oder 28 werden die Transistoren 20, 22 durchgeschaltet, da dann an der Basis nicht Masse, sondern eine vom Dauerplus der Batterie herrührende Spannung anliegt, so daß wiederum ein Basis-Emitter-Strom fließt, der den Kollektor auf Masse zieht. Auf Steuerleitung 33 liegt wieder das EBS_{ON}-Signal an, so daß die Spannungsversorgung und damit die Zentraleinheit dauernd aktiviert wird. Die die beiden vom Fußbremsmodul kommenden Leitungen SIG1/SIG2 können bei aktivierter Zentraleinheit eingelesen und auf Fehler und Plausibilität geprüft werden. Desweiteren handelt es sich bei dem in Figur 1 gezeigten System um ein redundantes System mit zwei Schaltern 9,11 und zwei Transistoren 20, 22. Selbstverständlich würde vom Gedanken der Erfindung auch Gebrauch gemacht, wenn das System als nicht redundantes System mit nur einem Schalter 9 und einem Transistor 20 ausgeführt wäre.
Ein weiterer Vorteil der in Fig.1 dargestellten Schaltung ist, daß die Aktivierung weitgehend strom- bzw. leistungslos erfolgt und die im Fußbremsmodul angeordneten Geber nur mit geringen Strömen beaufschlagt werden.

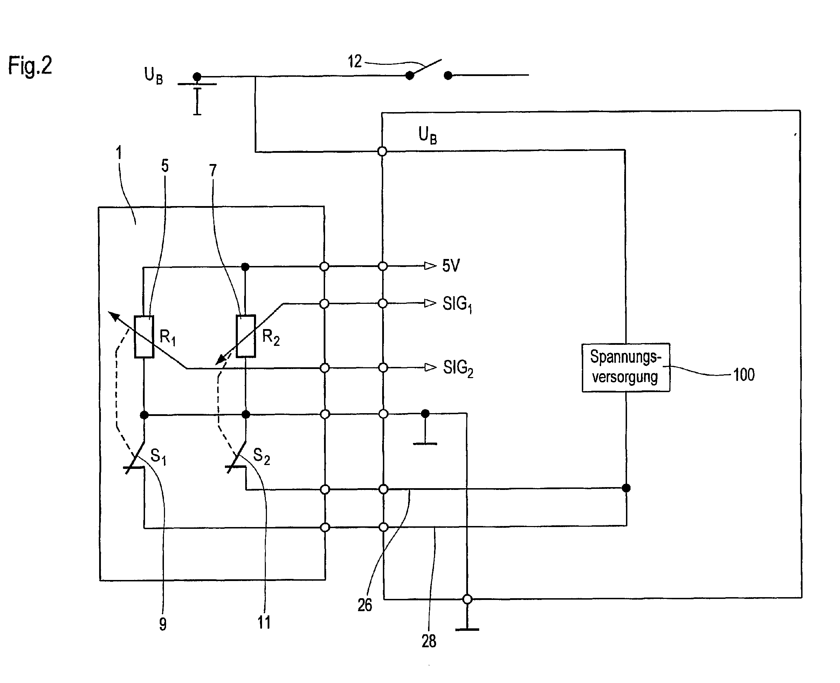

Anstelle von Schließern können auch Öffner als Schalter 9,11 verwendet werden, ohne vom Gedanken der Erfindung abzuweichen. Ebenso können alle verwendeten Signale und/oder Transistoren invertiert werden, ohne den Schaltungssinn zu verändern.
Eine vereinfachte Ausführungsform der Erfindung ist in Figur 2 gezeigt. Gleiche Bauteilen sind mit denselben Bezugsziffern wie in Fig. 1 belegt. Bei der Ausführungsform gemäß Figur 2 werden die mit den Gebern verbundenen Schalter 9, 11 direkt mit der Spannungsversorgung 100 verbunden. Die Schalter 9, 11 sind als Schließer ausgebildet. Zur Vereinfachung ist in Fig 2 der Zündkreis nicht gezeigt. Wird bei ausgeschalteter Zündung das Bremspedal betätigt, so werden die Schalter 9, 11 geschlossen. Hierdurch wird die Spannungsversorgung auf Masse 31 gelegt. Es fließt nunmehr ein Strom durch die an Dauerplus angelegten Spannungsversorgung 100 zur Masse 31. Hierdurch wird die Spannungsversorgung und damit die Zentraleinheit 3 aktiviert.

Mit der Erfindung wird eine elektronische Schaltung beschrieben, mit der es möglich ist, ein elektronisches Bremssystem auch dann zu aktivieren, wenn die Fahrzeugzündung ausgeschaltet ist, beispielsweise durch Betätigen des Bremspedals.

### Bezugszeichenliste

- 1: Fußbremsmodul
- 3: Zentraleinheit
- 5: Elektronischer Geber
- 7: Elektronischer Geber
- 9: Schalter im Fußbremsmodul
- 10: mechanische Verbindung
- 11: Schalter im Fußbremsmodul
- 12: Zündschalter
- 13: Batterie
- 20: Transistor
- 22: Transistor
- 24.1,24.2,25: Widerstand
- 26: Leitung SIG 1
- 28: Leitung SIG 2
- 29: Masseleitung
- 31: Masse
- 33: Steuerleitung, auf der Signal zur Aktivierung der Zentraleinheit EBS ON/OFF anliegt
- 100: Spannungsversorgung
- 102: Transistor
- 104: Widerstand
- SIG 1,SIG 2:: Ausgangssignale des elektronischen Gebers , die vom Fußbremsmodul an die Zentraleinheit übermittelt werden.

## Patentansprüche

1. Steuersystem für ein elektronisches Bremssystem, umfassend
1.1 eine Fußbremseinheit (1) mit Mitteln (5, 9, 7, 11) zum Gewinnen eines elektrischen Signals bei Bewegen des Fußbremspedals der Fußbremseinheit (1);
1.2 eine Zentraleinheit (3) mit einer Spannungsversorgung (100) zum Ansteuern des elektronischen Bremssystems, wobei die Zentraleinheit (3) zur Aufnahme von Signalen vom Fußbremspedal mit der Fußbremseinheit elektrisch verbunden ist,
wobei
1.3 das Steuersystem eine Schaltung umfaßt, mit der durch Betätigen des Bremspedals der Fußbremseinheit (1) bei ausgeschalteter Fahrzeugzündung entweder ein Signal (32) generiert wird, mit der die Spannungsversorgung (100) und damit die Zentraleinheit (3) aktiviert wird oder mit der die Spannungsversorgung (100) und damit die Zentraleinheit (3) direkt aktiviert wird,
**dadurch gekennzeichnet, daß**
1.4 die Mittel zur Gewinnung eines elektrischen Signals wenigstens einen Geber (5, 7) und wenigstens einen mit dem Geber verbundenen Schalter (9, 11) umfassen, wobei bei Betätigen des Fußbremsmoduls der Schalter (9, 11) seinen Zustand ändert, so daß das aufgrund der Änderung des Zustandes des Schalters generierte Signal (32) bei ausgeschalteter Fahrzeugzündung die Spannungsversorgung (100) und damit die Zentraleinheit (3) und das gesamte Bremssystem aktiviert.

2. System nach Anspruch 1, **dadurch gekennzeichnet, daß** der Schalter (9, 11) ein Öffner ist, der bei Betätigen des Fußbremspedals geöffnet wird.

3. System nach Anspruch 1, **dadurch gekennzeichnet, daß** der Schalter (9, 11) ein Schließer ist, der bei Betätigen des Fußbremspedals geschlossen wird.

4. Steuersystem nach einem der Ansprüche 1 bis 3, **dadurch gekennzeichnet, daß** die Zentraleinheit (3) an die Dauerstromversorgung (13) des Fahrzeugs angeschlossen ist und die Schaltung zur Aktivierung der Zentraleinheit des weiteren eine Steuerleitung (33) umfaßt, die mit der Spannungsversorgung (100) verbunden ist und auf der das durch die Schaltung generierte Signal EBS_{ON} zur Aktivierung der Spannungsversorgung (100) anliegt sowie wenigstens einen weiteren Schalter (20, 22) in der Zentraleinheit (3), wobei durch das Schließen oder Öffnen des Schalters (9, 11) im Fußbremsmodul beispielsweise die weiteren Schalter (20, 22) angesprochen werden, so daß die Steuerleitung (33) auf Masse gelegt wird und dadurch das Signal EBS_{ON} zur Aktivierung der Spannungsversorgung (100) und damit der Zentraleinheit (3) generiert wird.

5. Steuersystem nach Anspruch 4, **dadurch gekennzeichnet, daß** die weiteren Schalter im Steuergerät durch entsprechend geschaltete Transistoren (20, 22) ausgebildet werden, wobei die Basis der Transistoren bei geschlossenem Schalter im Fußbremsmodul, zum Beispiel auf Masse (31) liegt, so daß die Transistoren zum Beispiel gesperrt sind und bei geöffnetem Schalter im Fußbremsmodul an der Basis der Transistoren eine Spannung anliegt, so daß ein Basisstrom fließt und der Kollektor durchgeschaltet wird.

6. Steuersystem nach Anspruch 5, **dadurch gekennzeichnet, daß** zum Beispiel die Kollektoren der Transistoren mit der Steuerleitung (33) verbunden sind und daß bei Durchschalten der Kollektoren der Transistoren das Signal EBS_{ON} zur Aktivierung der Spannungsversorgung und damit der Zentraleinheit (3) generiert wird.

7. Steuersystem nach Anspruch 3, **dadurch gekennzeichnet, daß** durch Betätigen des Schließerkontaktes (9, 11) die Spannungsversorgung (100) auf Masse gelegt wird, wodurch die Spannungsversorgung (100) und damit die Zentraleinheit (3) aktiviert wird.

8. Verfahren zum Aktivieren der Zentraleinheit eines Steuersystems bei ausgeschalteter Zündung gemäß einem der Ansprüche 5 bis 6, umfassend die folgenden Schritte:
8.1 das Fußbremspedal wird betätigt,
8.2 der bzw. die dem Pedal zugeordneten Schalter (9, 11) werden geöffnet, so daß
8.3 die Basis wenigstens eines Transistors (20, 22) in der Zentraleinheit (3) durchgesteuert wird, in dem ein Basisstrom fließt und über den Transistor die Spannungsversorgung (100) und damit die Zentraleinheit (3) aktiviert wird.

9. Verfahren zur Aktivierung der Zentraleinheit (3) eines Steuersystems bei ausgeschalteter Zündung gemäß Anspruch 7, umfassend folgende Schritte:
9.1 das Fußbremspedal wird betätigt,
9.2 der bzw. die dem Pedal zugeordneten Schalter (9, 11) werden geschlossen, so daß
an der Spannungsversorgung Masse anliegt und damit die Spannungsversorgung (100) und damit die Zentraleinheit (3) aktiviert wird.

## Claims

1. Control system for an electronic brake system, comprising
1.1 a foot brake unit (1) including means (5, 9, 7, 11) for generating an electric signal upon a movement of the foot brake pedal of said foot brake unit (1);
1.2 a central unit (3) including a power supply (100) for controlling said electronic brake system, with said central unit (3) for receiving signals from said foot brake pedal being electrically connected to said foot brake unit,
wherein
1.3 said control system includes a circuit either serving to generate a signal (32) by actuation of said brake pedal of said foot brake unit (1) when the vehicle ignition system is deactivated, thus activating said central unit (3), or serving to activate said power supply (100) directly and hence said central unit (3),
**characterised in that**
1.4 said means for generating an electrical signal comprise at least one generator (5, 7) and at least one switch (9, 11) connected to said generator, with said switch (9, 11) changing its state, when said foot brake module is actuated, such that the signal (32) generated on account of the change of state of said switch activates said power supply (100) and hence said central unit (3) and the brake system in its entirety when the ignition system of the vehicle is switched off.

2. System according to Claim 1, **characterised in that** said switch (9, 11) is an opener that is opened when said foot brake pedal is operated.

3. System according to Claim 1, **characterised in that** said switch (9, 11) is a make-element which is closed when said foot brake pedal is operated.

4. Control system according to any of the Claims 1 to 3, **characterised in that** said central unit (3) is connected to said constant power supply (13) of the vehicle and that said circuit for activation of said central unit includes moreover a control line (33) that is connected to said power supply (100) and on which said signal EBS_{ON} generated by said circuit for activation of said power supply (100) is applied, as well as at least one further switch (20, 22) in said central unit (3), with the closing or opening of said switch (9, 11) in said foot brake module causing said further switches (20, 22), for instance, to respond such that said control line (33) is connected to ground and thus said signal EBS_{ON} is generated for activation of said power supply (100) and hence said central unit (3).

5. Control system according to Claim 4, **characterised in that** said further switches in said controller are configured by appropriately connected transistors (20, 22), with the base of said transistors being connected to ground (31), for instance, when said switch in said foot brake module is closed, so that said transistors are reverse-biased, for instance, and, when said switch in said foot brake module is opened, a voltage is applied to the base of said transistors so that a base current is flowing and the collector is activated.

6. Control system according to Claim 5, **characterised in that** the collectors of said transistors, for instance, are connected to said control line (33) and that, when the collectors of said transistors are activated, said signal EBS_{ON} is generated for activating said power supply and hence said central unit (3).

7. Control system according to Claim 3, **characterised in that** the closing of said make-contact (9, 11) connects said power supply (100) to ground, which induces the activation of said power supply (100) and hence of said central unit (3).

8. Method of activating the central unit of a control system when the ignition system is switched off, according to any of the Claims 5 to 6, comprising the following steps:
8.1 said foot brake pedal is operated,
8.2 said switch or switches (9, 11) associated with said pedal is or are opened so that
8.3 the base of at least one transistor (20, 22) in said central unit (3) is activated due to a base current flowing and due to activation of said power supply (100) and hence said central unit (3) via said transistor.

9. Method of activating the central unit of a control system when the ignition system is switched off, according to Claim 7, comprising the following steps:
9.1 said foot brake pedal is operated,
9.2 said switch or switches (9, 11) associated with said pedal is or are closed so that ground is connected to said power supply and thus said power supply (100) and hence said central unit (3) are activated.

## Revendications

1. Système de commande pour un système électronique de freinage, comprenant
1.1 une unité de frein à pédale (1) renfermant des moyens (5, 9, 7, 11) à engendrer un signal électrique en réponse à un mouvement du pédale du frein à pédale de ladite unité de frein à pédale (1);
1.2 une unité centrale (3) renfermant un bloc d'alimentation (100) à commander ledit système électronique de freinage, à ladite unité centrale (3) à recevoir des signaux provenant dudit pédale du frein à pédale étant raccordée, de façon électrique, à ladite unité de frein à pédale,
dans lequel
1.3 ledit système de commande renferme un circuit, soit servant à engendrer un signal (32) en réponse à la commande dudit pédale de frein de ladite unité de frein à pédale (1), quand le système d'allumage du véhicule est désactivé, en activant ainsi ladite unité centrale (3), soit servant à activer ledit bloc d'alimentation (100) directement et ainsi ladite unité centrale (3),
**caractérisé en ce**
1.4 que lesdits moyens à engendrer un signal électrique comprend au moins un générateur (5, 7) et au moins un commutateur (9, 11) relié audit générateur, audit commutateur (9, 11) commutant son état, quand ledit module du frein à pédale est commandé, d'une telle manière, que le signal (32) engendré en vertu à la commutation de l'état dudit commutateur active ledit bloc d'alimentation (100) et ainsi ladite unité centrale (3) et le système de freinage complet, quand le système d'allumage du véhicule est mis hors circuit.

2. Système selon la revendication 1, **caractérisé en ce que** ledit commutateur (9, 11) est un élément ouvrant, qui s'ouvre, quand ledit pédale du frein à pédale est commandé.

3. Système selon la revendication 1, **caractérisé en ce que** ledit commutateur (9, 11) est un élément à fermeture, qui se ferme, quand ledit pédale du frein à pédale est commandé.

4. Système de commande selon une quelconque des revendications 1 à 3, **caractérisé en ce que** ladite unité centrale (3) est raccordé au bloc d'alimentation en continu (13) du véhicule, et **en ce que** ledit circuit à activer ladite unité centrale renferme, au plus, une ligne pilote (33) raccordée audit bloc d'alimentation (100), à laquelle s'applique ledit signal EBS_{ON} engendré par ledit circuit à activer ledit bloc d'alimentation (100), ainsi qu'au moins un commutateur supplémentaire (20, 22) dans ladite unité centrale (3), à la fermeture ou ouverture dudit commutateur (9, 11) dans ledit module de frein à pédale causant lesdits commutateurs supplémentaires (20, 22), par exemple, de répondre d'une telle manière, que ladite ligne pilote (33) soit mise à la terre et ainsi ledit signal EBS_{ON} soit engendré afin d'activer ledit bloc d'alimentation (100) et ainsi ladite unité centrale (3).

5. Système de commande selon la revendication 4, **caractérisé en ce que** lesdits commutateurs supplémentaires dans ladite unité de commande sont configurés moyennant des transistors reliés de façon adéquate (20, 22), à la base desdits transistors étant mise à la terre (31), par exemple, quand ledit commutateur dans ledit module de frein à pédale est fermé, de façon, que lesdits transistors soient bloqués, par exemple, et, quand ledit commutateur dans ledit module de frein à pédale est ouvert, une tension est appliquée à la base desdits transistors de façon, qu'un courant de base s'écoule et le collecteur soit activé.

6. Système de commande selon la revendication 5, **caractérisé en ce que** les collecteurs desdits transistors, par exemple, sont raccordés à ladite ligne pilote (33) et **en ce que**, quand les collecteurs desdits transistors sont activés, ledit signal EBS_{ON} est engendré afin d'activer ledit bloc d'alimentation et ainsi ladite unité centrale (3).

7. Système de commande selon la revendication 3, **caractérisé en ce que** la fermeture dudit contact à fermeture (9, 11) met ledit bloc d'alimentation (100) à la terre, ce qui induit l'activation dudit bloc d'alimentation (100) et ainsi de ladite unité centrale (3).

8. Procédé à activer l'unité centrale d'un système de commande, quand le système d'allumage est mis hors circuit, selon une quelconque des revendications 5 à 6, comprenant les étapes suivantes :
8.1 ledit pédale du frein à pédale est commandé,
8.2 ledit commutateur ou lesdits commutateurs (9, 11) affecté(s) audit pédale s'ouvre ou respectivement s'ouvrent, de façon
8.3 que la base d'au moins un transistor (20, 22) dans ladite unité centrale (3) soit activée en vertu de l'écoulement d'un courant de base et en vertu de l'activation dudit bloc d'alimentation (100) et ainsi de ladite unité centrale (3) via ledit transistor.

9. Procédé à activer l'unité centrale d'un système de commande, quand le système d'allumage est mis hors circuit, selon la revendication 7, comprenant les étapes suivantes :
9.1 ledit pédale du frein à pédale est commandé,
9.2 ledit commutateur ou lesdits commutateurs (9, 11) affecté(s) audit pédale s'ouvre ou respectivement s'ouvrent, de façon que la terre soit appliquée audit bloc d'alimentation, en activant ledit bloc d'alimentation (100) et ainsi ladite unité centrale (3).
